# EUROPEAN PATENT APPLICATION

(11) **EP 1 918 167 A1**
(43) Date of publication of application: **07.05.2008**
(21) Application number: 06291692.9
(22) Date of filing: 30.10.2006
(51) Int. Cl.: B60S 1/52, B60S 1/38

(54) **A device for attachment to a wiper blade**

(71) Applicant: Valeo Systèmes d'Essuyage, 78321 La Verrière (FR)
(72) Inventor: Krizek, Oldrich, 74321 Bietigheim-Bissingen (DE); Pierredon, David, 30390 Theziers (FR); Fink, Andrea, 71723 Grossbottwar (DE)
(74) Representative: Jahn, Wolf-Diethart

(57) **Abstract**

A device for attachment to a wiper blade (10) and wiper arm for directing washing fluid over a surface to be wiped comprises an elongate pipe (24) configured to extend along the wiper blade (10) parallel to the longitudinal axis of the wiper blade (10), the pipe (24) being connectable with a supply duct operable to supply washing fluid to the pipe (24), an array of nozzles (29) arranged along the pipe (24) in a direction of extension of the pipe (24), the nozzles (29) being configured to direct the washing fluid over the surface to be wiped, a plurality of attachment members (25) for attachment of the pipe (24) to the wiper blade (20), and a connector member (21) adapted to be attached to the wiper arm and having communicating connectors (36) for the pipe and for the supply duct.

## Description

### Field of the Invention

The present invention generally relates to a device for attachment to a wiper blade. More particularly, but not exclusively, the present invention relates to a device for attachment to a wiper blade that enables washing fluid to be sprayed from the wiper blade onto a surface being wiped by the wiper blade.

### Background of the Invention

In vehicles it is known to direct a spray of windscreen washing fluid onto the windscreen as the windscreen is wiped by wiper blades. The washing fluid is sprayed onto the windscreen by jets located at the bottom of the windscreen. A problem with directing fluid onto the windscreen in this way is that the fluid may not cover the whole of the windscreen, thus only a portion of the windscreen will be cleaned.

Systems have been proposed in which a windscreen wiper has its own supply duct attached for carrying washing fluid. This allows windscreen washing fluid to be sprayed onto the windscreen directly from the windscreen wiper.

In one system, a wiper blade has a profiled cover with a passage provided inside the cover along its length. The passage carries washing fluid and has nozzles distributed along its length for supplying washing fluid to a glass surface to be wiped. A problem with this system is that it can only be provided along the entire length of the wiper blades so there is no flexibility for placement of the nozzles. Also, the profiled cover is provided with a groove along its entire length for engaging with splines on the sides of the wiper blade. This means that the cover can only fit onto one type of wiper blade having that particular shape or profile.

In another system, the duct carrying the washing fluid is attached to the wiper blade by clips. Each clip is provided with a hollow needle that pierces a wall of the duct. Washing fluid can then flow through the needles and through holes provided on the clip. One end of the needle is then accommodated inside the duct after having pierced the wall of the duct. A problem with this system is that, if the clips are placed in the wrong position, to subsequently move them to a desired position will leave a hole in the duct out of which washing fluid can leak.

The present invention has been devised with the foregoing in mind.

### Summary of the Invention

According to the invention there is provided a device for attachment to a wiper blade and for directing washing fluid over a surface to be wiped, which comprises a supply duct and a nozzle. The nozzle is integrally formed with an attachment member and a supply duct connector. The attachment member has engagement arms for engaging around an edge of a wiper blade opposite the surface to be wiped. This allows the device to be flexibly positioned on the wiper blade so as to provide optimum wiping of the surface.

Preferably the engagement arms each have a free wing adapted to engage into a groove extending along the wiper blade. The device should preferably include a clamp member for attaching the supply duct to the wiper blade. The clamp member should include engagement arms for engaging around and edge of a wiper blade opposite to the surface to be wiped and the engagement arms of the clamp member should each have a free wing adapted to engage into the groove extending along the wiper blade.

Alternatively, the engagement arms can each be provided with a groove that is adapted to receive an outer edge part of a strip-shaped spline of the wiper blade. A clamp member can also be included for attaching the supply duct to the wiper blade. In this case, the clamp member includes engagement arms for engaging around an edge of a wiper blade opposite to the surface to be wiped. The engagement arms of the clamp member each have a groove adapted to receive an outer edge part of a strip-shaped spline of the wiper blade. The clamp member can have a pair of cooperating arms for engagement about the supply duct.

The nozzle can be provided with a plurality of nozzle outlets spaced along the longitudinal axis of the wiper blade, which can be configured to direct washing fluid in a spray which diverges as it emerges from the nozzle and is directed on to the surface to be wiped.

The present invention also provides a device for attachment to a wiper blade and wiper arm for directing washing fluid over a surface to be wiped, which comprises an elongate pipe configured to extend along the length of the wiper blade in a direction parallel to the longitudinal axis of the wiper blade. The pipe is connectable with a supply duct operable to supply washing fluid to the pipe. An array of nozzles is arranged along the pipe in a direction of extension of the pipe. A plurality of attachment members are provided, which attach the pipe to the wiper blade and a connector member is adapted to be attached to the wiper arm and has communicating connectors for the pipe and for the supply duct. The fitting can thus be connected to any shape or configuration of wiper blade - a separate fitting for each different shape of wiper blade is not required. The fitting can also be retrofit to existing systems without modification of the wiper blade.

The cross-sectional area of the aperture should be equal to the cross-sectional area of the pipe so that the pipe is securely held by the attachment member. The pipe can be generally cylindrical. Advantageously the pipe and the aperture are formed so as to have a polygonal cross-section. This prevents the pipe from twisting in the attachment member so that the nozzles always face in the required direction. A plug member can be provided to fit into the aperture so as to seal an end of the pipe and fix the pipe end in one of the attachment members. Ideally, the plug member has a flat for engagement with an opposed surface of the attachment member to prevent rotation of the pipe about its longitudinal axis.

The fitting can be implemented in any wiper blade for cleaning a surface, but is particularly advantageously used in a wiper blade for wiping a vehicle windscreen.

Further advantages and characteristics of the invention ensue from the description below of the preferred embodiments of the invention and from the accompanying drawings, in which:

### Brief description of the drawings

Fig. 1 shows a wiper blade fitting according to a first embodiment of the invention;
Fig. 2 shows a wiper blade fitting for a different configuration of wiper blade according to a first embodiment of the invention;
Fig. 3 shows a clamp for use with the wiper blade fitting according to the first embodiment of the invention;
Fig. 4 shows a clamp for use with a different configuration of wiper blade fitting according to a first embodiment of the invention;
Fig. 5 shows a wiper blade comprising a wiper blade fitting according to the first embodiment of the invention;
Fig. 6 shows a windscreen wiper comprising a fitting according to a second embodiment of the invention;
Fig. 7 shows a windscreen wiper fitting according to a second embodiment of the invention; and
Fig. 8 shows a windscreen wiper fitting according to a second embodiment of the invention.

### Description of the preferred embodiments

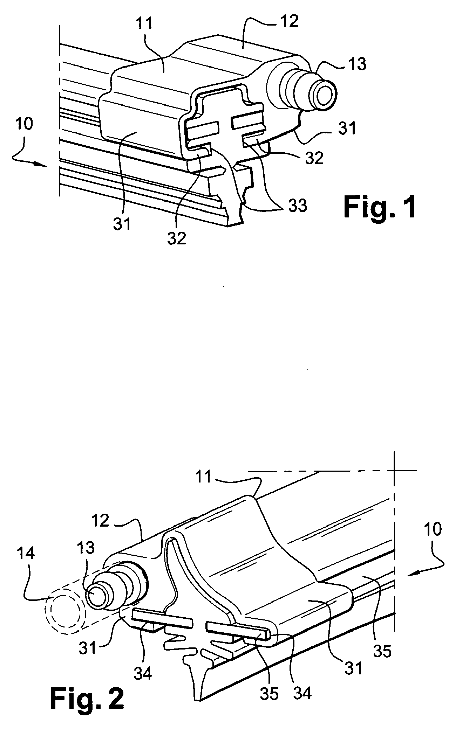

Referring now to Figures 1 to 5, a first embodiment of the invention provides a fitting for a wiper blade 10. An attachment member 11 defines an opening for receiving the wiper blade 10. A nozzle 12 is provided adjacent to the attachment member 11 such that the nozzle 12 and the attachment member 11 are integrally formed. The attachment member 11 is provided with engagement arms 31, which engage around the edge of the wiper blade 10 opposite to the side of the wiper blade 10 that is operable to wipe a surface.

On one end of the nozzle 12 there is an supply duct connector 13. A supply duct 14 is connected to the nozzle 12 via the supply duct connector 13 such that the supply duct 14 runs parallel to the wiper blade 10. Washing fluid, for example liquid for washing a vehicle windscreen, is distributed to the nozzle 12 by the supply duct 14 for spraying through the opening in the nozzle 12. The fitting in Figure 1 is configured to fit a so-called claw-clamp wiper blade and in Figure 2 the fitting is configured to fit a flat wiper blade.

In Figure 1, the engagement arms 31 each have a wing 32. The wings 32 each engage with a groove 33, which extends along the length of the wiper blade 10 on both sides, so as to secure the device to the wiper blade 10. In Figure 2, the engagement arms 31 are each provided with a groove 34. The groove 34 acts to secure the device to the wiper blade 10 by receiving a spline 35 provided on each side of the wiper blade 10 and extending along the length of the wiper blade 10. Therefore the attachment member 11 can be configured to receive any shape of wiper blade, by molding the attachment member 11, so that the aperture receiving the wiper blade 10 has same shape as the upper surface of the wiper blade 10 opposite the wiping surface of the blade itself, and configuring the engagement arms 31 to engage with the edges of any shape of wiper blade.

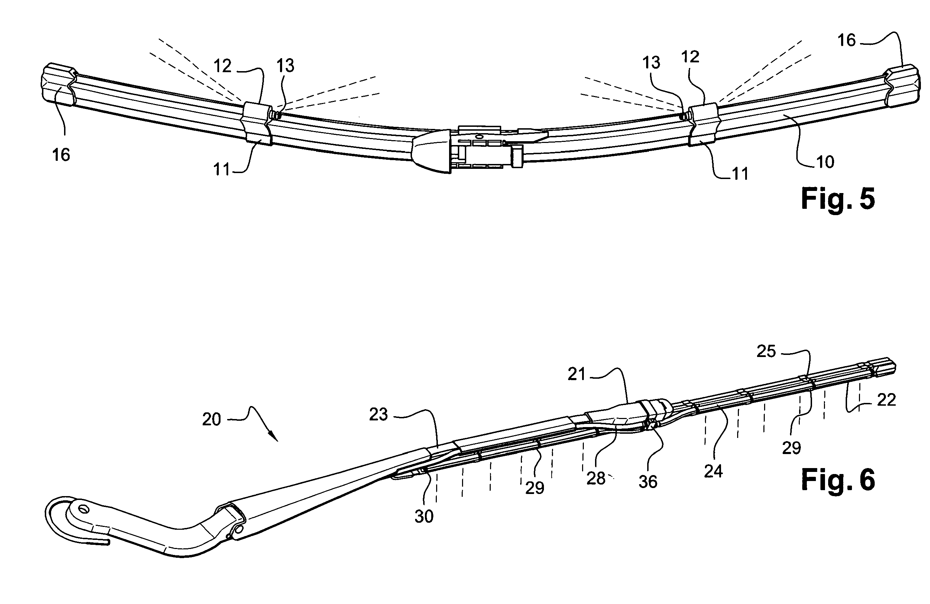

Two nozzle outlets may be provided on opposite ends of the nozzie 12. This is shown more clearly in Figure 5, where two devices are provided on the wiper blade 10. The nozzles 12 are aligned along the longitudinal axis of the wiper blade 10. However, the nozzle 12 may alternatively be provided with a plurality of nozzle outlets spaced along the longitudinal axis of the wiper blade 10. In this case, the nozzle outlets are configured so that, when the washing fluid emerges from the nozzle 12, it is sprayed in a divergent spray over the surface to be wiped.

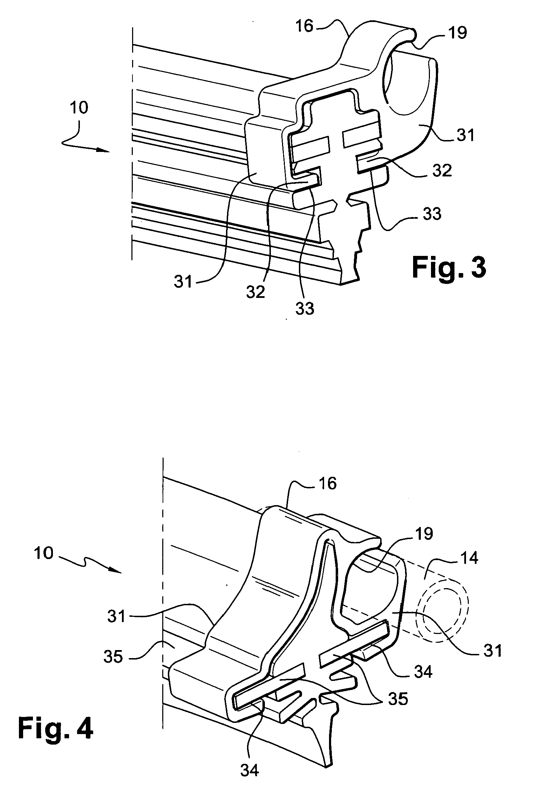

Clamps 16 serve to secure the supply duct 14 in place in clamping recesses 19. In this way the supply duct 14 can be held securely against the side of the wiper blade 10 so as not to interfere with the profile of the wiper blade 10. The clamps are provided at both ends of the wiper blade 10. As can be seen in Figures 3 and 4, the clamps are also provided with engagement arms 31 that can be configured to fit different shapes of wiper blade. In Figure 3, the engagement arms 31 are each provided with a wing 32, which can engage with the groove 33, provided along the length of the wiper blade 10 on each side of the wiper blade 10. In Figure 4, the engagement arms 30 are each provided with a groove 34, which can receive the spline 35 projecting from each of the side edges of the wiper blade 10, along the length of the wiper blade 10.

When it is required to wipe a surface with the wiper blade 10 and wash the surface, washing fluid flows from the supply duct and into the nozzle 12 when the wiper blade 10 is actuated. The fluid is then forced out of an opening in the nozzle 12 as the wiper blade 10 travels over a surface to be wiped. Because the washing fluid is sprayed from the wiper blade 10 as it moves over the surface, the fluid is received over a larger area of the surface and therefore wiping of the surface is more efficient.

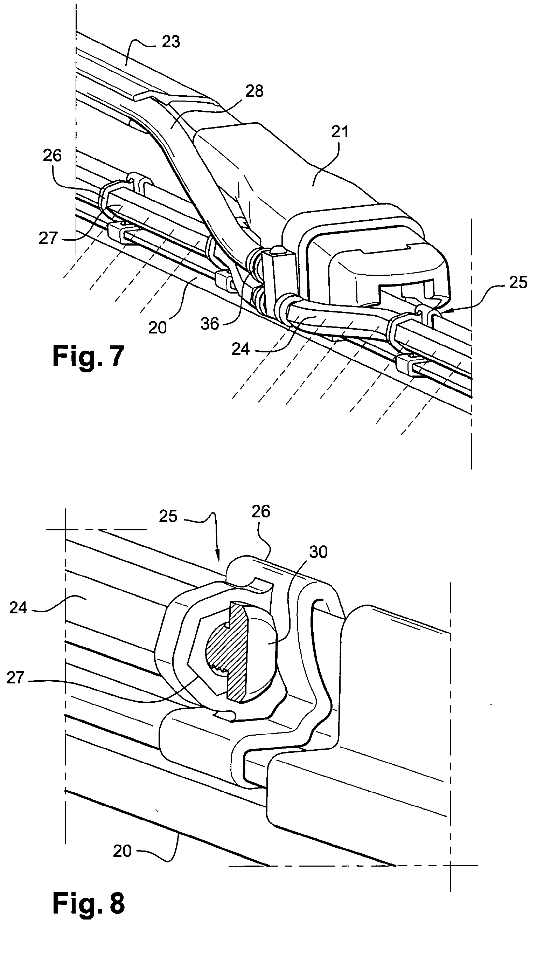

A second embodiment of the invention will now be described with reference to Figures 6 to 8. A windscreen wiper 20 is shown having an connector member 21 for attaching a wiper blade 22 to the wiper arm 23. The wiper blade 22 is provided on the underside of the windscreen wiper 20 and a pipe 24 is fixed to the edge of the windscreen wiper 20 by attachment clips 25. This is shown more clearly in Figures 7 and 8. Each attachment clip 25 has a clamp 26 for clamping the clip 25 to the wiper blade 20 and an aperture 27 for receiving the pipe 24. The clamp 26 can have any suitably shaped cross-section for receiving a windscreen wiper 20 having a similar cross-section.

The pipe 24 is guided through the clips 25 through apertures 27 and is held securely in the apertures 27, since each aperture 27 has a surface area substantially equal to the cross sectional area of the pipe 24. In this case the aperture 27 and the pipe 24 both have a hexagonal cross-section.

One end of a supply duct 28 is connected to the pipe 24 at the connector member 21. The connector member 21 has communicating connectors 36 for connecting the supply duct 28 to the pipe 24. The opposite end of the supply duct 28 is connected to a tank carrying washing fluid (not shown). The supply duct 28 can then feed washing fluid into the pipe 24. An array of nozzles 29 are provided in the pipe 24, which washing fluid can flow out of. The attachment clips 25 provided at either end of the wiper blade 22 each have a plug member 30 provided in the aperture 27 to prevent the pipe 24 from slipping out of the clips 25 at either end, and to seal both ends of the pipe to prevent washing fluid from leaking out. The plug members 30 have the same shaped cross-section as the pipe 24 and the apertures 27 and also serve to stop the pipe twisting in the apertures 27. This means that the nozzles 29 are held in the required position throughout use of the windscreen wiper 20. The clamp 26 provided on each clip 25 has the same profile as the top surface of the wiper blade 10, so that the clamp 26 is securely held on the windscreen wiper 20.

When it is required to wash a windscreen with washing fluid at the same time as wiping the windscreen, the windscreen wiper 20 is actuated and washing liquid flows from the tank (not shown), along the wiper arm 23 through the supply duct 28 and into the pipe 24 provided along the wiper blade 20, via the communicating connectors 36 provided on the connector member 21. As the wiper blade 20 moves from its rest position across the windscreen, the washing liquid is forced out of the nozzles 29 parallel to the direction of travel of the wiper blade 20. The nozzles can be positioned along the pipe 24 so that the washing liquid is distributed for optimum effective cleaning of the windscreen.

Although the present invention has been described hereinabove with reference to specific embodiments, it is not limited to these embodiments and no doubt alternatives will occur to the skilled person that fall within the scope of the invention as claimed.

## Claims

1. A device for attachment to a wiper blade (10) and for directing washing fluid over a surface to be wiped, the device comprising a supply duct (14) and a nozzle (12) integrally formed with an attachment member (11) and a supply duct connector (13), the attachment member (11) having engagement arms (31 for engaging around an edge of a wiper blade (10) opposite to the surface to be wiped.

2. The device according to claim 1, wherein the engagement arms (31) each have a free wing adapted to engage into a groove (33) extending along the wiper blade (10).

3. The device according to claim 2, and including a clamp member (16) for attaching said supply duct (14) to the wiper blade (10), the clamp member (16) having engagement arms (31) for engaging around an edge of a wiper blade (10) opposite to the surface to be wiped, the engagement arms (31) of the clamp member (16) each having a free wing adapted to engage into said groove (33) extending along the wiper blade (10).

4. The device according to claim 1, wherein the engagement arms (31) each have a groove (34) adapted to receive an outer edge part of a strip-shaped spline (35) of the wiper blade (10).

5. The device according to claim 4, and including a clamp member (16) for attaching said supply duct (14) to the wiper blade (10), the clamp member (16) having engagement arms (31) for engaging around an edge of a wiper blade (10) opposite to the surface to be wiped, the engagement arms of the clamp member each having a groove (34) adapted to receive an outer edge part of a strip-shaped spline (35) of the wiper blade (10).

6. The device according to claim 3 or claim 5, wherein said clamp member (16) has a pair of cooperating arms for engagement about said supply duct.

7. The device according to any preceding claim, wherein the nozzle comprises a plurality of nozzle outlets spaced along a longitudinal axis of the wiper blade (10, 20), the nozzle outlets being configured to spray washing fluid out from the nozzle in a diverging spray over the surface to be wiped.

8. A device for attachment to a wiper blade and wiper arm for directing washing fluid over a surface to be wiped, the device comprising:
an elongate pipe (24) configured to extend along the wiper blade (20) parallel to the longitudinal axis of the wiper blade, the pipe (24) being connectable with a supply duct operable to supply washing fluid to the pipe;
an array of nozzles (29) arranged along the pipe (24) in a direction of extension of the pipe, the nozzles being configured to direct the washing fluid over the surface to be wiped;
a plurality of attachment members (25) for attachment of the pipe (24) to the wiper blade (20);
and
a connector member (21) adapted to be attached to the wiper arm and having communicating connectors (36) for the pipe and for the supply duct.

9. The device according to claim 8, wherein the pipe (24) has a polygonal cross-section.

10. The device according to claim 8 or claim 9, further comprising a plug member (30) sealing an end of the pipe (24) and fixing the pipe end in one of the attachment members (25).

11. The device according to claim 10, wherein said plug member (30) has a flat for engagement with an opposed surface of said attachment member to prevent rotation of the pipe (24) about its longitudinal axis.
